# FASCICULE DE BREVET EUROPEEN

(11) **EP 4 662 740 B1**
(45) Date de publication et mention de la délivrance du brevet: **13.05.2026**
(21) Numéro de dépôt: 24706432.2
(22) Date de dépôt: 20.02.2024
(51) Int. Cl.: H01R 4/48, H01R 4/64, F24S 25/636, H02S 40/30, F24S 25/60

(54) **DISPOSITIF DE CONNEXION POUR METTRE À LA TERRE UN ÉQUIPEMENT ÉLECTRIQUE ET/OU CRÉER UNE LIAISON ÉQUIPOTENTIELLE ENTRE DES ÉLÉMENTS CONDUCTEURS**
VERBINDUNGSVORRICHTUNG ZUR ERDUNG EINER ELEKTRISCHEN VORRICHTUNG UND/ODER ZUR ERZEUGUNG EINER ÄQUIPOTENTIALVERBINDUNG ZWISCHEN LEITENDEN ELEMENTEN
CONNECTION DEVICE FOR GROUNDING AN ELECTRICAL APPARATUS AND/OR CREATING AN EQUIPOTENTIAL LINK BETWEEN CONDUCTIVE ELEMENTS

(30) Priorité: 30.03.2023 FR 2303091
(43) Date de publication de la demande: 17.12.2025
(73) Titulaire: Mobasolar, 68600 Wolfgantzen (FR)
(72) Inventeur: KELLER, Marc, 68127 Oberhergheim (FR)
(74) Mandataire: Ipsilon
(86) Numéro de dépôt international: PCT/EP2024/054311
(87) Numéro de publication internationale: WO 2024/199827

(56) Documents cités:
- EP-A2- 2 684 252
- US-A1- 2010 151 747
- US-A1- 2011 085 875
- US-A1- 2013 109 249

## Description

### Domaine technique

La présente invention concerne un dispositif de connexion pour mettre à la terre un équipement électrique et/ou créer une liaison équipotentielle entre des éléments conducteurs. L'invention permet, par exemple, de mettre à la terre un équipement électrique automatiquement lors de son montage sur une structure de support.

L'invention trouve une application particulièrement avantageuse pour la mise à la terre des cadres de panneaux photovoltaïques.

### Technique antérieure

Le Demandeur développe des solutions particulièrement pertinentes pour mettre à la terre automatiquement des équipements électriques lors de leur montage.

Il est notamment titulaire du brevet EP2684252, qui propose un dispositif de connexion de mise à la terre d'une installation électrique. Ce dispositif comporte des moyens d'auto-connexion permettant de créer une liaison électrique automatiquement lors du montage d'équipements électriques, tels que des cadres de panneaux photovoltaïques, sur leurs supports. Le dispositif de connexion comporte des dents aptes à mordre les cadres des panneaux afin d'obtenir une connexion fiable. Le dispositif de connexion est par ailleurs flexible, ce qui permet de maintenir une pression des dents sur le cadre après montage. Outre la mise à la terre automatique au montage, cette solution permet également de réduire le nombre de pièces utilisées et de simplifier l'installation, car elle permet de réduire le nombre de câbles, cosses et vis nécessaires à la mise à la terre.

Le document US 2011/085875 propose un dispositif de fixation pouvant être utilisé pour réaliser une liaison équipotentielle entre un profilé et support et un module solaire. Il existe un besoin d'accélérer la mise en place de tels dispositifs, tout en améliorant la sécurité.

Par ailleurs, dans le domaine des panneaux photovoltaïques, il est courant de maintenir les cadres fixés sur leurs supports par des brides de serrage. Afin d'avoir un indicateur visuel de serrage, les brides peuvent être maintenues à distance de leur position serrée par un ressort, de sorte qu'un simple coup d'œil en direction d'une bride permet à un opérateur de savoir si cette bride est serrée ou non. Ces ressorts, qui peuvent être métalliques ou en plastique, ajoutent à la complexité de l'installation.

### Exposé de l'invention

La présente invention vise à pallier ces inconvénients en proposant un dispositif de connexion pour mettre à la terre un équipement électrique et/ou créer une liaison équipotentielle entre des éléments conducteurs, agencé pour être au moins en partie intercalé entre une première pièce et une seconde pièce, ladite première pièce appartenant audit équipement électrique et étant électriquement conductrice, et ladite seconde pièce appartenant à une structure de support sur laquelle est monté ledit équipement électrique et étant au moins en partie électriquement conductrice, ledit dispositif de connexion comportant :
- au moins un premier moyen d'auto-connexion agencé pour créer automatiquement un contact électrique avec ladite première pièce lorsque ledit équipement électrique est monté sur ladite structure de support, et
- au moins un deuxième moyen d'auto-connexion agencé pour créer automatiquement un contact électrique avec ladite seconde pièce lorsque ledit équipement électrique est monté sur ladite structure de support,

de sorte qu'une liaison équipotentielle est créée automatiquement entre au moins ledit équipement électrique et ladite structure de support lors du montage dudit équipement électrique sur ladite structure de support via ledit dispositif de connexion,
Ledit dispositif de connexion est particulier en ce qu'il comporte en outre au moins un moyen de rappel agencé pour s'étendre entre une pièce de serrage de ladite première pièce sur ladite seconde pièce et ladite seconde pièce, et pour être comprimé lorsque ladite pièce de serrage est en position serrée, ledit au moins un moyen de rappel étant apte à maintenir ladite pièce de serrage à une distance prédéterminée de sa position serrée lorsque ladite pièce de serrage n'est pas en position serrée, et
ledit dispositif de connexion est également particulier en ce qu'il comporte une lame électriquement conductrice, ledit au moins un moyen de rappel étant formé dans ladite lame par découpage et/ou pliage.

Grâce à ces dispositions, l'invention permet d'améliorer, de faciliter et d'optimiser la mise à la terre et/ou la liaison équipotentielle de tout type d'installation électrique, quelle que soit la nature de la structure de support, qu'elle soit ou non électriquement conductrice, qu'elle soit continue ou discontinue, ce nouveau dispositif étant particulièrement simple, rapide, fiable, sécurisé, sans difficulté, accessible à un personnel non qualifié, ergonomique, polyvalent et garanti dans le temps quelles que soient les conditions climatiques ou environnementales, le dispositif de connexion permettant en outre de bien positionner une pièce de serrage et de la garder à distance de sa position serrée, ce qui facilite le montage de l'installation électrique et permet de facilement s'assurer que l'ensemble des pièces de serrage d'une installation sont serrées.

Ledit premier moyen d'auto-connexion et/ou ledit deuxième moyen d'auto-connexion peut être formé dans ladite lame par découpage et/ou pliage, ce qui facilite encore la fabrication du dispositif selon l'invention.

Ladite lame peut être réalisée en acier ressort, qui est un matériau aux propriétés élastiques et de conductivité convenant particulièrement à l'invention.

Ledit au moins un moyen de rappel comporte des sections rectilignes reliées par au moins une section courbe, le rayon de courbure de l'au moins une section courbe étant diminué lorsque le moyen de rappel est comprimé, ce qui est un moyen de réalisation simple et robuste de l'invention.

Ledit dispositif de connexion peut comporter deux moyens de rappel s'étendant sur deux côtés opposés dudit dispositif de connexion, ce qui permet de maintenir la pièce de serrage de façon stable, sans qu'un effort trop important ne soit nécessaire pour comprimer les moyens de rappel.

Ledit dispositif de connexion peut comporter une zone de réception comprenant une paroi de réception formant la base d'un U et au moins deux parois de placement formant les bras dudit U, ladite zone de réception étant réalisée de préférence par découpage et/ou pliage de ladite lame et agencée pour recevoir au moins une partie de ladite pièce de serrage, ce qui permet un placement optimal de la pièce de serrage en vue de la serrer.

Ladite paroi de réception peut comporter une première ouverture apte à être traversée par un moyen de fixation de la pièce de serrage tel qu'une vis, ce qui permet audit dispositif de bien entourer le moyen de fixation et ainsi de supporter la pièce de serrage de façon stable en vue de son serrage.

Au moins une desdites au moins deux parois de placement peut comporter au moins un moyen de retenue agencé pour s'incruster dans la matière de ladite pièce de serrage et empêcher son retrait, et simultanément créer un contact électrique avec ladite pièce de serrage si elle est électriquement conductrice, ce qui permet d'empêcher l'extraction de la pièce de serrage dudit dispositif, et qu'une fois serrée, la pièce de serrage soit éventuellement mise en liaison équipotentielle avec la première pièce et la seconde pièce.

Ledit au moins un moyen de retenue peut être formé par au moins une dent pointue, obtenue par découpage et/ou pliage dans un des bras du U de la zone de réception, disposée saillante à l'intérieur du U, ce qui est un moyen de réalisation simple et robuste de l'invention.

Ladite zone de réception peut comporter deux parois de placement, chaque paroi de placement comportant un moyen de retenue, ce qui permet une retenue efficace.

Ladite zone de réception peut comporter quatre parois de placement, chaque paroi de placement comportant un moyen de retenue, ce qui améliore encore l'efficacité de la retenue.

Ladite zone de réception peut comporter au moins deux parois de placement, lesdites au moins deux parois de placement étant situées à proximité de deux coins opposés de ladite paroi de réception, ledit dispositif comportant au moins deux moyens de retenue situés sur chacune des au moins deux parois de placement, ce qui permet avec un nombre restreint de moyens de retenue d'assurer une retenue optimale.

Ledit premier moyen d'auto-connexion et/ou ledit deuxième moyen d'auto-connexion peut comporter une denture pointue, agencée pour s'incruster dans la matière de ladite première pièce, respectivement seconde pièce, lorsque ledit équipement électrique est monté sur ladite structure de support, ladite denture pointue étant de préférence obtenue par découpage et/ou pliage de ladite lame électriquement conductrice, ce qui constitue un mode de réalisation facile à fabriquer et efficace. La denture permet, lorsque la première pièce, respectivement la seconde pièce, est réalisée en aluminium anodisée, d'enlever localement l'anodisat afin d'établir un contact électrique presque parfait.

Ledit dispositif de connexion peut comporter au moins deux premiers moyens d'auto-connexion, les premiers moyens d'auto-connexion étant agencés pour raccorder automatiquement à la terre ou à un potentiel de référence deux équipements électriques disposés côte à côte et montés sur une structure de support, ce qui permet de mutualiser les dispositifs de connexion pour plusieurs équipement électriques.

Le dispositif de connexion peut encore comporter une ouverture configurée pour être traversée par un moyen de fixation de la pièce de serrage, ledit dispositif de connexion comportant en outre au moins un moyen de maintien s'étendant à partir du bord de l'ouverture, et permettant de maintenir ledit moyen de fixation dans ladite ouverture. Ceci permet de maintenir en position le moyen de fixation avant serrage.

Le dispositif de connexion peut comporter une base comprenant une deuxième ouverture configurée pour être traversée par un moyen de fixation de la pièce de serrage, ladite base comportant un troisième moyen d'auto-connexion, agencé pour créer automatiquement un contact électrique avec un écrou coopérant avec ledit moyen de fixation lorsque ledit équipement électrique est monté sur ladite structure de support. Ces dispositions permettent de mettre à la terre de façon simple et rapide cet écrou.

Ladite distance prédéterminée peut être supérieure ou égale à 4 mm, ce qui est une distance suffisante pour facilement repérer visuellement une pièce de serrage qui n'est pas bien serrée.

La présente invention propose également un procédé de montage d'une première pièce sur une seconde pièce, ladite première pièce appartenant à un équipement électrique et étant électriquement conductrice, et ladite seconde pièce appartenant à une structure de support sur laquelle est monté ledit équipement électrique, ladite seconde pièce pouvant être au moins en partie électriquement conductrice, ledit dispositif comportant les étapes suivantes :
- mise en place d'un dispositif de connexion selon l'invention et d'une pièce de serrage sur ladite seconde pièce, de sorte que la pièce de serrage soit maintenue par ledit dispositif de connexion en position d'être serrée,
- mise en place de ladite première pièce, de sorte que le dispositif de connexion soit au moins en partie intercalé entre la première pièce et la seconde pièce,
- serrage de ladite pièce de serrage de façon à comprimer ledit au moins un moyen de rappel, provoquant automatiquement la création d'une liaison équipotentielle entre ledit équipement électrique et ladite structure de support.

### Brève description des dessins

La présente invention et ses avantages apparaîtront mieux dans la description suivante de plusieurs modes de réalisation donnés à titre d'exemples non limitatifs, en référence aux dessins annexés, dans lesquels :
[Fig 1] La figure 1 est une vue de profil montrant schématiquement un dispositif de connexion selon un premier mode de réalisation de l'invention, intercalé entre un support et un cadre, en position non serrée,
[Fig 2] La figure 2 est une vue en perspective du dispositif de connexion de la figure 1,
[Fig 3] La figure 3 est une vue de face du dispositif de connexion des figures 1 et 2, [Fig 4] La figure 4 est une vue de profil montrant schématiquement un dispositif de connexion selon un deuxième mode de réalisation de l'invention, intercalé entre un support et un cadre, en position non serrée,
[Fig 5] La figure 5 est une vue en perspective du dispositif de connexion de la figure 4,
[Fig 6] La figure 6 est une vue de face du dispositif de connexion des figures 4 et 5, [Fig 7] La figure 7 est une vue de face montrant schématiquement un dispositif de connexion selon un troisième mode de réalisation de l'invention, intercalé entre un support et un cadre, en position non serrée,
[Fig 8] La figure 8 est une vue en perspective du dispositif de connexion de la figure 7,
[Fig 9] La figure 9 est une vue de face du dispositif de connexion des figures 7 et 8, [Fig 10] La figure 10 est une vue en perspective du dispositif de connexion des figures 1 à 3, monté sur un rail avec une pièce de serrage, la pièce de serrage étant parallèle au rail,
[Fig 11] La figure 11 est une vue en perspective du dispositif de connexion des figures 1 à 3, monté sur un rail avec une pièce de serrage, la pièce de serrage étant orthogonale au rail,
[Fig. 12] La figure 12 est une vue en perspective d'une partie d'un dispositif de connexion selon un quatrième mode de réalisation,
[Fig. 13] La figure 13 est une vue de face d'une partie du dispositif de connexion de la figure 12,
[Fig. 14] La figure 14 est une vue en perspective du dispositif de connexion de la fig. 12, assemblé à une pièce de serrage, un moyen de fixation et un écrou, en position non serrée, et
[Fig. 15] La figure 15 est une vue de profil du dispositif de connexion de la fig. 12, assemblé à un écrou, l'écrou étant disposé dans un rail en position bloquée.

### Description des modes de réalisation

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Par ailleurs, les positions géométriques indiquées dans la description et les revendications, telles que « perpendiculaire », « parallèle », « symétrique » ne sont pas limitées au sens strict défini en géométrie, mais s'étendent à des positions géométriques qui sont proches, c'est-à-dire qui acceptent une certaine tolérance dans le domaine technique considéré, sans influence sur le résultat obtenu.

Cette tolérance est notamment introduite par l'adverbe « sensiblement », sans que ce terme soit nécessairement répété devant chaque adjectif.

En référence aux figures, le dispositif de connexion 1a, 1b, 1c, 1d selon l'invention est agencé pour faciliter la création d'une liaison équipotentielle et le cas échéant la mise à la terre d'équipements électriques montés sur une structure de support en s'intercalant entre une première pièce 2 appartenant aux équipements électriques et une seconde pièce 3 appartenant à la structure de support. On entend par « équipement électrique », tout élément qui peut être électriquement conducteur, et par « structure de support », toute surface de réception apte à recevoir l'équipement électrique. La première pièce 2 est généralement réalisée dans des matériaux électriquement conducteurs, essentiellement métalliques, parfois anodisés, tandis que la seconde pièce 3 est réalisée en tout ou partie dans des matériaux électriquement conducteurs, essentiellement métalliques et éventuellement anodisés également.

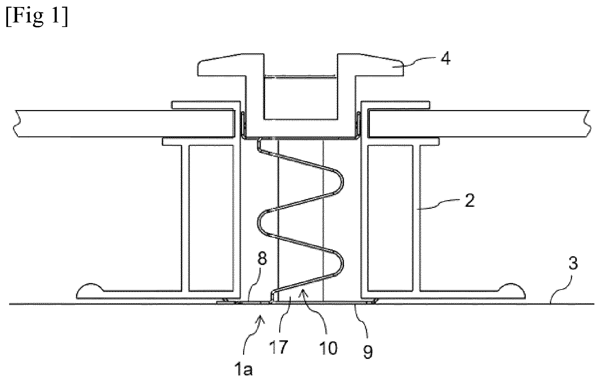

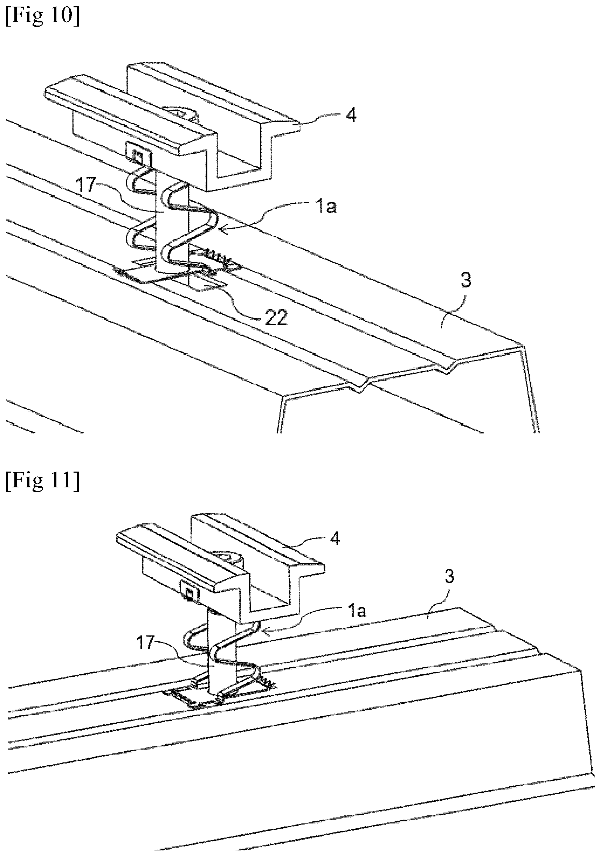

Les figures 1, 4 et 7 illustrent des exemples d'application de l'invention à une installation de panneaux photovoltaïques pourvus chacun d'un cadre métallique, constituant ladite première pièce 2 électriquement conductrice. Les panneaux photovoltaïques sont disposés côte à côte pour couvrir une surface, et sont montés, dans l'exemple représenté, sur un élément de réception, constituant ladite seconde pièce 3. La seconde pièce 3 peut être un rail, comme illustré aux figures 10 et 11. Bien entendu, tout autre type de structure de support avec un mode de montage différent peut convenir, dont l'emplacement, la forme et la conception sont adaptés à l'application et à la destination de ladite installation. La structure de support peut être disposée au sol ou en hauteur, conçue pour définir une surface de réception de forme générale plane, courbe ou complexe, disposée dans un plan général horizontal, vertical ou incliné, et définie par des organes de support ponctuels ou discontinus comme des plots, des tronçons de rail, ou par des organes de support continus comme des rails, ou encore par une combinaison des deux, ainsi que par tout autre moyen de support équivalent. Au moins une partie de la seconde pièce 3 est réalisée dans un matériau conducteur, tel que l'aluminium et ses alliages, mais le reste de la structure de support peut être réalisé dans tout type de matériaux sans exception, tels que l'aluminium et ses alliages, les matières synthétiques et composites, les matières naturelles à base de bois, etc. Encore une fois, l'invention n'est pas limitée aux installations de panneaux photovoltaïques mais s'étend à toute application mettant en œuvre des composants électriques nécessitant une mise à la terre ou une mise en équipotentialité avec un élément de la structure de montage, tels que des panneaux thermiques, des panneaux hybrides thermiques/photovoltaïques ou similaires, des onduleurs ou micro-onduleurs, des structures métalliques de toutes sortes, des chemins de câbles, des cages de Faraday, des bâtis de machine, des cabines techniques de travail (ex. cabines de peinture), etc. ces exemples n'étant pas limitatifs.

Dans le cadre de la présente invention, le montage de la première pièce 2 sur la seconde pièce 3 est maintenu par la présence d'une pièce de serrage 4, par exemple une bride, qui peut être maintenue en position serrée par une vis.

Les figures 10 et 11 illustrent deux types de montage différents comportant un dispositif de connexion 1a identique dans les deux cas, les deux montages s'effectuant sur une seconde pièce 3 qui est un rail. Dans le montage illustré en figure 10, la pièce de serrage 4 est parallèle au rail 3, ce qui permet par exemple de disposer des panneaux photovoltaïques avec le petit côté disposé parallèle au rail 3. Dans le montage illustré en figure 11, la pièce de serrage 4 est perpendiculaire au rail 4, ce qui permet par exemple de disposer des panneaux photovoltaïques avec le grand côté disposé parallèle au rail 3.

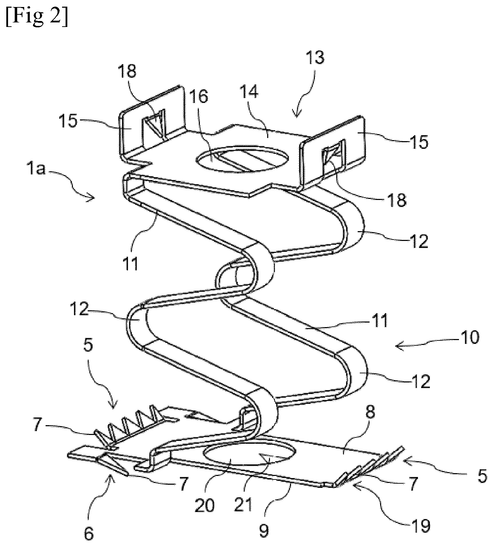

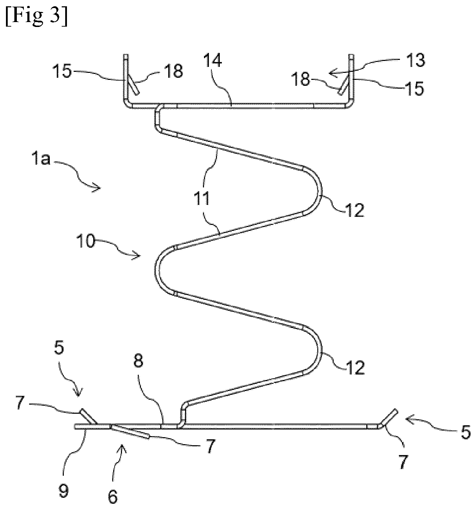

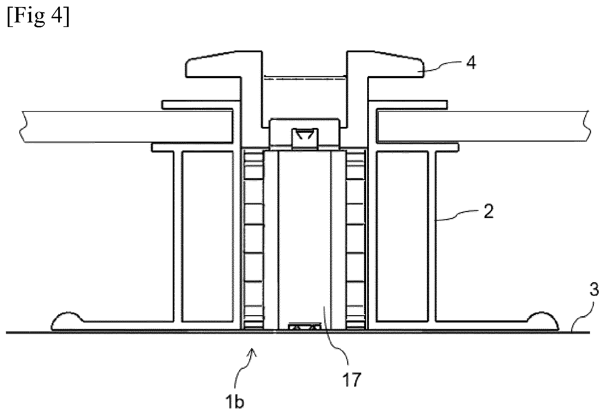

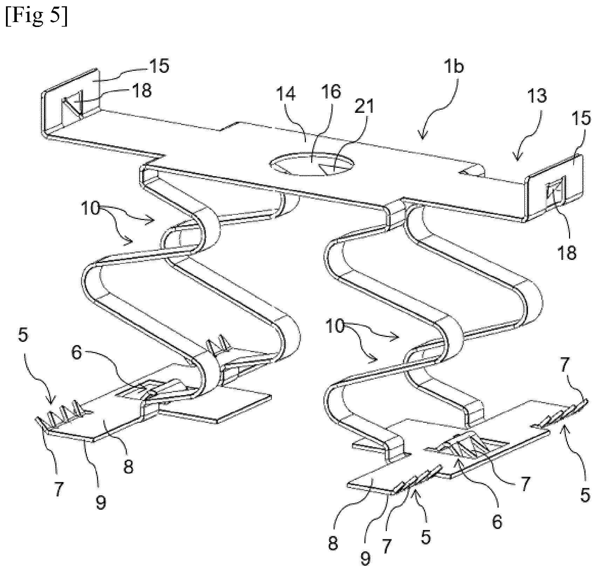

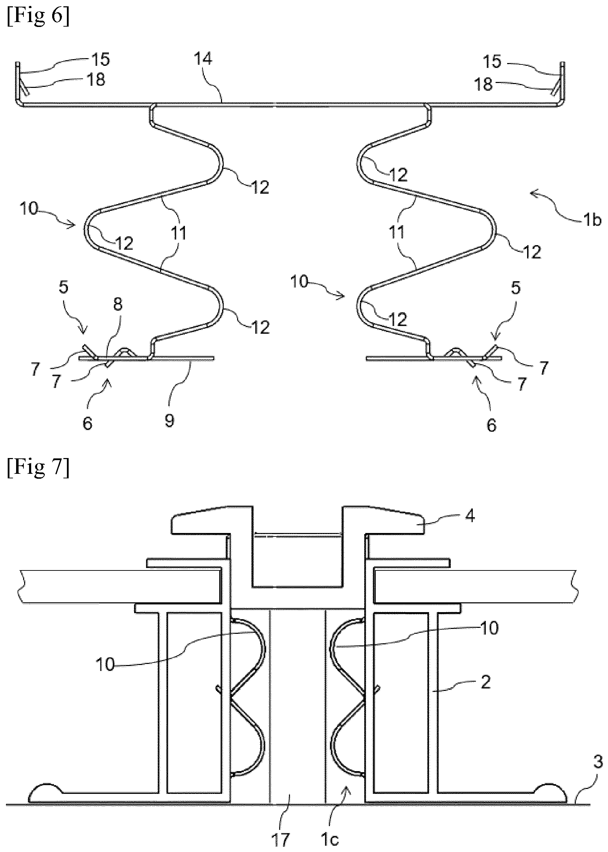

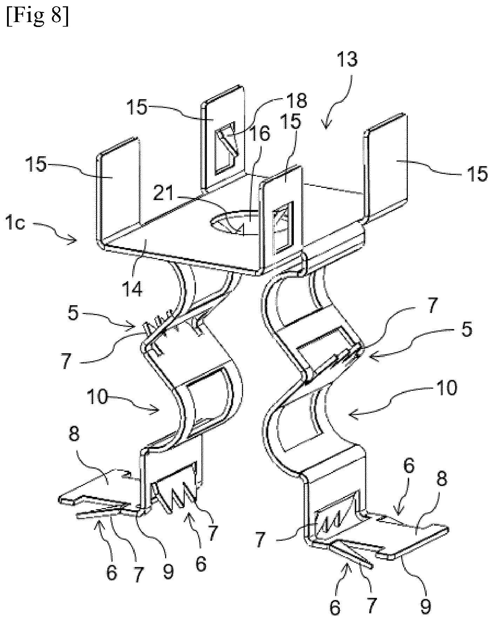

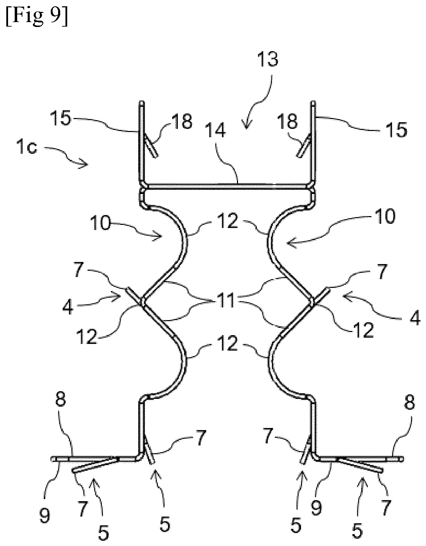

Le dispositif de connexion 1a, 1b, 1c, 1d est représenté en détail dans les figures 2 et 3 selon le mode de réalisation de la figure 1, dans les figures 5 et 6 selon le mode de réalisation de la figure 4, ainsi que dans les figures 8 et 9 selon le mode de réalisation de la figure 7.

Le dispositif de connexion 1a, 1b, 1c, 1d comporte ou est constitué d'une lame taillée dans une bande de matière métallique et élastique, par exemple dans une bande en acier ressort inoxydable. Cette bande de matière peut avoir une épaisseur relativement faible et par exemple comprise entre 0,5mm et 1mm, sans que ces valeurs ne soient limitatives. Bien entendu, toute autre matière techniquement équivalente, ayant de bonnes propriétés de conductivité électrique et d'élasticité peut convenir. Cette matière peut en outre comporter ou non un traitement de surface thermique et/ou chimique pour ajouter des propriétés par exemple de protection en fonction de la nature des pièces 2, 3 en présence du milieu ambiant.

Le dispositif de connexion 1a, 1b, 1c, 1d comporte au moins un premier moyen d'auto-connexion 5 et au moins un deuxième moyen d'auto-connexion 6 agencés pour créer automatiquement un contact électrique entre le dispositif de connexion 1a, 1b, 1c, 1d et la première pièce 2, respectivement la seconde pièce 3, lorsque l'équipement électrique est monté sur la structure de support. Ceci permet qu'au montage, une liaison équipotentielle soit automatiquement créée entre l'équipement électrique et la structure de support, et par exemple de relier l'équipement électrique à la terre si la structure de support a été préalablement reliée à la terre.

Le premier moyen d'auto-connexion 5 et/ou le deuxième moyen d'auto-connexion 6 peuvent comporter une denture 7, formée par exemple par découpage et pliage dans la lame électriquement conductrice. La denture 7 est constituée d'au moins une dent, par exemple cinq dents pour le premier moyen d'auto-connexion 5, et deux dents pour le deuxième moyen d'auto-connexion 6 (une dent de chaque côté), sans que ces nombres ne soient limitatifs. La denture 7 du premier moyen d'auto-connexion 5 est de préférence saillante par rapport à un premier plan de contact 8 appartenant au dispositif de connexion 1a, 1b, 1c, 1d, et étant en contact avec la première pièce 2. Dans certains modes de réalisation, la denture 7 du premier moyen d'auto-connexion 5 s'étend à partir du plan de contact 8. Dans d'autres modes de réalisation, la denture 7 du premier moyen d'auto-connexion 5 traverse le premier plan de contact 8. La denture 7 du deuxième moyen d'auto-connexion 6 est de préférence saillante par rapport à un deuxième plan de contact 9 appartenant au dispositif de connexion 1a, 1b, 1c, 1d, et étant en contact avec la seconde pièce 3. Dans d'autres modes de réalisation, la denture 7 du deuxième moyen d'auto-connexion 6 traverse le deuxième plan de contact 9, comme dans le mode de réalisation illustré aux figures 5 et 6. Quel que soit le mode de réalisation, la denture 7 est agencée pour buter, puis s'incruster dans la matière de la première pièce 2, respectivement la seconde pièce 3, lorsque l'équipement électrique est monté sur la structure de support, et pressé contre elle par la pièce de serrage 4, créant automatiquement un contact électrique entre la première pièce 2, ledit dispositif de connexion 1a, 1b, 1c, 1d et la seconde pièce 3.

Les premier et/ou deuxième moyens d'auto-connexion 5, 6 sont de préférence formés dans la lame électriquement conductrice par découpage et/ou pliage, formant une languette élastique, ce qui a l'avantage d'assurer le contact électrique, et ce même si la pression de serrage varie du fait soit de la dilatation des matériaux sous l'effet de contraintes extérieures, soit d'un desserrage de la pièce de serrage 4.

Le dispositif de connexion 1a, 1b, 1c, 1d peut comporter plusieurs premiers moyens d'auto-connexion 5 et/ou plusieurs deuxièmes moyens d'auto-connexion 6. Par exemple deux premiers moyens d'auto-connexion 5 et deux deuxièmes moyens d'auto-connexion 6, comme illustré en figure 2, quatre premiers moyens d'auto-connexion 5 et deux deuxièmes moyens d'auto-connexion 6, comme illustré en figure 5, ou encore deux premiers moyens d'auto-connexion 5 et six deuxièmes moyens d'auto-connexion 6, comme illustré en figure 8, ces exemples n'étant pas limitatifs.

Les premiers moyens d'auto-connexion 5 d'un dispositif de connexion 1a, 1b, 1c, 1d peuvent tous être agencés pour s'insérer dans une même première pièce 2, ou dans plusieurs premières pièces 2 distinctes, comme illustré en figure 1 avec deux pièces 2 distinctes liées au même dispositif de connexion 1a, 1b, 1c, 1d. De la même manière, les deuxièmes moyens d'auto-connexion 6 d'un dispositif de connexion 1a, 1b, 1c, 1d peuvent tous être agencés pour s'insérer dans une même seconde pièce 3, ou dans plusieurs secondes pièces 3 distinctes.

Le dispositif de connexion comporte encore au moins un moyen de rappel 10. Le moyen de rappel 10 est formé dans la lame électriquement conductrice par découpage et/ou pliage, de façon à prendre une forme apte à être comprimée.

Dans un mode préféré de l'invention, le moyen de rappel 10 comporte une alternance de sections rectilignes 11 et de sections courbes 12, c'est-à-dire au moins deux sections rectilignes 11 reliées par au moins une section courbe 12. Les deux sections courbes 12 entourant une section rectiligne 11 ont un sens de courbure inversé, de manière à ce que l'ensemble de ces trois sections ait une forme de S. Sous l'effet d'une pression tendant à rapprocher les extrémités du moyen de rappel 10 entre elles, les rayons de courbure des sections courbes 12 diminuent, ce qui a pour effet de rapprocher les sections rectilignes 11 les unes des autres et de comprimer le moyen de rappel 10. Le rayon de courbure peut être identique pour toutes les sections courbes 12 d'un moyen de rappel, comme illustré aux figures 1 à 6, ou il peut varier au sein d'un même dispositif de connexion 1c, comme illustré aux figures 7 à 9. Dans l'exemple illustré aux figures 7 à 9, une ouverture a été pratiquée à l'intérieur de la lame au niveau de certaines sections courbes 12 afin de faciliter la compression du moyen de rappel 10. Cette disposition est particulièrement utile en cas de rayons de courbure importants, par exemple à partir de 5 mm.

Le moyen de rappel 10 comporte une pluralité de sections rectilignes reliées entre elles en série, formant entre chaque paire de deux sections rectilignes consécutive un angle. Les deux angles entourant une section rectiligne ont une orientation opposée, de manière à ce que les ensembles de trois sections rectilignes consécutives ait une forme de Z. Sous l'effet d'une pression tendant à rapprocher les extrémités du moyen de rappel 10 entre elles, les amplitudes des angles diminuent, ce qui a pour effet de rapprocher les sections rectilignes les unes des autres et de comprimer le moyen de rappel 10. Les amplitudes des angles prises lorsque le moyen de rappel est au repos peut être identique pour tous les angles d'un dispositif de connexion 1a, 1b, 1c, 1d, ou peut varier au sein d'un même dispositif de connexion 1a, 1b, 1c, 1d. Dans certains modes de réalisation, une ouverture est pratiquée à l'intérieur de la lame au niveau de certains angles afin de faciliter la compression du moyen de rappel 10. Cette disposition est particulièrement utile en cas d'angles ayant une amplitude importante.

Le moyen de rappel 10 est agencé de façon à s'étendre entre la pièce de serrage 4 et la seconde pièce 3. Le moyen de rappel 10 peut ne pas être en contact avec la pièce de serrage 4 ou la seconde pièce 3, d'autres éléments intermédiaires pouvant être présents. Le moyen de rappel 10 est agencé pour être comprimé lorsque la première pièce 2 est montée sur la seconde pièce 3, et que la pièce de serrage 4 est en position serrée. Lorsque la pièce de serrage 4 n'est pas en position serrée, le moyen de rappel 10 est au repos, ou légèrement comprimé par le poids de la pièce de serrage 4, et s'étend alors sur une distance plus importante que lorsqu'il est comprimé. La pièce de serrage 4 est ainsi maintenue à une distance prédéterminée de sa position serrée, cette distance prédéterminée correspondant à la distance entre la position de la pièce de serrage en position serrée, et la position de la pièce de serrage lorsqu'elle est maintenue à distance par le moyen de rappel 10 en position non serrée.

La distance prédéterminée entre les positions serrées, et en attente, de la pièce de serrage 4, peut être supérieure à 4 mm, de préférence comprise entre 5 et 15 mm. Il est à noter que pour un dispositif de connexion donné, plusieurs distances prédéterminées peuvent être utilisées suivant les dimensions de la pièce 2.

Le dispositif de connexion 1a, 1b, 1c, 1d peut comporter plusieurs moyens de rappel 10, par exemple deux moyens de rappel 10, comme illustré aux figures 2 et 8, ou quatre, comme illustré en figure 5. Ce nombre peut être adapté en fonction du poids de la pièce de serrage 4, qui doit pouvoir être supporté par l'ensemble des moyens de rappels 10 sans qu'ils ne se compriment trop, et des géométries respectives du dispositif de connexion 1a, 1b, 1c, 1d et de la pièce de serrage 4, afin que la pièce de serrage soit maintenue de façon stable à une distance prédéterminée de sa position serrée lorsqu'elle n'est pas dans cette position. La hauteur des moyens de rappel 10 peut aussi être adaptée aux dimensions de la pièce 2, par exemple à la hauteur d'un cadre de panneau photovoltaïque. Il est préférable dans certains cas de limiter le nombre de moyens de rappel 10 et/ou d'adapter leur géométrie, afin que l'effort requis pour les comprimer soit aussi faible que possible, de préférence juste supérieur au poids de la pièce de serrage 4. En effet dans certains domaines, tel que le photovoltaïque, le couple minimum de serrage à appliquer est de l'ordre de 10 Nm, et il est souhaitable de ne pas trop augmenter encore cet effort par celui requis pour la compression du ou des moyens de rappel 10.

Dans un mode de réalisation préféré, le dispositif de connexion 1a, 1b, 1c, 1d comporte une zone de réception 13 agencée pour recevoir la pièce de serrage 4. La zone de réception 13 est en forme de U, dont la base est formée par une paroi de réception 14 et les bras par au moins deux parois de placement 15. Selon les modes de réalisation, la zone de réception 13 peut comporter deux parois de placement 15, comme illustré aux figures 2 et 5, quatre parois de placement 15, comme illustré à la figure 8, ces exemples n'étant pas limitatifs. Ces dispositions dépendent des dimensions de la pièce de serrage 4, et aussi de l'optimisation dans l'utilisation de matière notamment lorsque le dispositif de connexion 1a, 1b, 1c, 1d est réalisé à partir d'une lame métallique.

La zone de réception 13 est de préférence formée dans la lame électriquement conductrice par découpage et/ou pliage.

Les dimensions du U peuvent correspondre aux dimensions de la pièce de serrage 4, afin que la pièce de serrage 4 soit maintenue en position, prête à être serrée, une fois qu'elle est posée sur la paroi de réception 14 entre les parois de placement 15, comme dans les modes de réalisation illustrés aux figures 10 et 11.

Les parois de placement 15 sont de préférence perpendiculaires à la paroi de réception 14, ce qui permet de facilement insérer dans la zone de réception 13 et d'y maintenir en position de manière stable une pièce de serrage 4 dont les parois amenées à être maintenues dans la zone de réception 13 sont perpendiculaires entre elles.

Les figures 1 à 9 montrent trois modes de réalisation différents du dispositif de connexion 1a, 1b, 1c, 1d, illustrant différentes variations de la zone de réception 13. Dans certains modes de réalisation, dont un exemple est illustré en figure 7, les parois de placement 15 s'étendent jusqu'à une butée de la pièce de serrage 4. Dans d'autres modes de réalisation, dont un exemple est illustré en figure 1, les parois de placement 15 ne s'étendent pas jusqu'à ce point.

Dans une variante préférée de l'invention, la zone de réception 13 comporte une première ouverture 16, apte à être traversée par un moyen de fixation 17 de la pièce de serrage 4. Ce moyen de fixation 17 peut par exemple être une vis. La première ouverture 16 est de préférence circulaire, avec un rayon intérieur légèrement plus important que le rayon du moyen de fixation 17, par exemple que le rayon de filetage d'une vis 17 (cf. fig. 10 et 11).

La zone de réception 13 peut comporter au moins un moyen de retenue 18. Le moyen de retenue 18 est de préférence situé sur une des parois de placement 15, et est agencé pour s'incruster dans la matière de la pièce de serrage 4 et empêcher son retrait lorsqu'elle est placée dans la zone de réception 13. Le moyen de retenue 18 peut également permettre de créer un contact électrique entre le dispositif de connexion 1a, 1b, 1c, 1d et la pièce de serrage 4 si celle-ci est au moins partiellement électriquement conductrice. Ceci permet de relier la pièce de serrage 4 à la terre, ensemble avec la première pièce 2 et la seconde pièce 3.

Le moyen de retenue 18 est de préférence obtenu par découpage et pliage dans une des parois de placement 15 de la zone de réception 13, afin d'obtenir au moins une dent pointue s'étendant à l'intérieur du U formé par la zone de réception 13. Lors de l'insertion de la pièce de serrage 4 dans la zone de réception 13, la dent s'incruste dans la matière de la pièce de serrage 4. La dent est de préférence orientée dans un sens s'opposant à l'extraction de la pièce de serrage 4, comme illustré aux figures 2, 3, 5, 6, 8 et 9. L'incrustation permet, lorsque la pièce de serrage 4 est au moins partiellement électriquement conductrice, de créer une liaison équipotentielle entre la pièce de serrage et la pièce de connexion, et de préférence avec la première pièce 2 et la seconde pièce 3, et ainsi éventuellement de relier à la terre la pièce de serrage 4.

La pièce de connexion 1a, 1b, 1c, 1d est de préférence intégralement réalisée dans une lame électriquement conductrice.

Dans une variante préférée de l'invention, la pièce de connexion 1a, 1b, 1c, 1d peut comporter une base 19, située en bas sur la figure 2. La base 19 peut comporter le premier plan de contact 8 et/ou le deuxième plan de contact 9. Les deux plans de contact 8, 9 constituent de préférence les faces opposées de la base 19. Les premiers moyens d'auto-connexion 5 peuvent alors s'étendre à partir de la base 19 vers un côté intérieur au dispositif de connexion 1a, 1b, 1c, 1d, et les deuxièmes moyens d'auto-connexion 6 peuvent s'étendre à partir de la base 19 vers un côté extérieur au dispositif de connexion 1a, 1b, 1c, 1d. La base 19 est reliée à la zone de réception 13 par au moins un moyen de rappel 10. La base 19 peut comporter une deuxième ouverture 20 afin d'y faire passer un moyen de fixation 17 de la pièce de serrage 4, la deuxième ouverture 20 étant éventuellement alignée avec la première ouverture 16 de la zone de réception 13. Ces dispositions permettent d'obtenir un dispositif de connexion 1a, 1b, 1c, 1d très simple à fabriquer à partir d'une bande métallique, comportant peu de matière et dont la fabrication ne produit que peu de chutes.

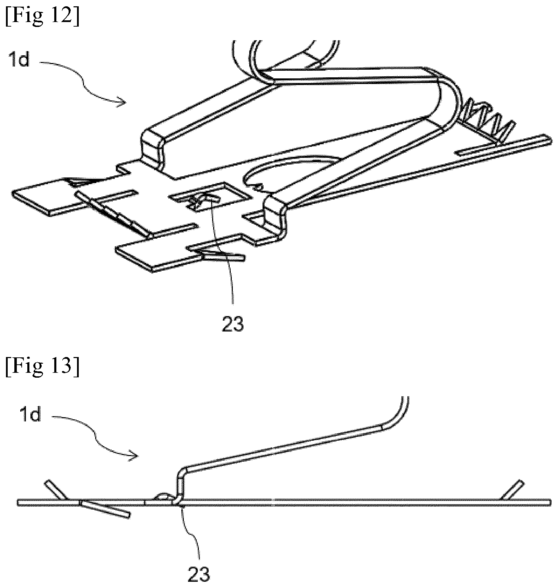

Comme illustré aux figures 12 à 15, dans la variante de l'invention comportant une base 19 et une deuxième ouverture 20, ladite base 19 peut comporter un troisième moyen d'auto-connexion 23. Le troisième moyen d'auto-connexion 23 est agencé pour créer automatiquement un contact électrique avec un écrou 24 coopérant avec le moyen de fixation, par exemple la vis 17, lorsque ledit équipement électrique est monté sur ladite structure de support. Le moyen d'auto-connexion 23 comporte de préférence une denture, formée par exemple par découpage et pliage dans la lame électriquement conductrice, et constituée d'au moins une dent.

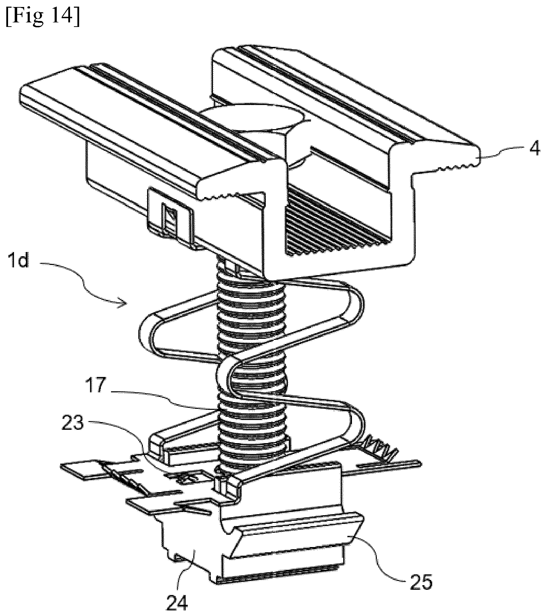

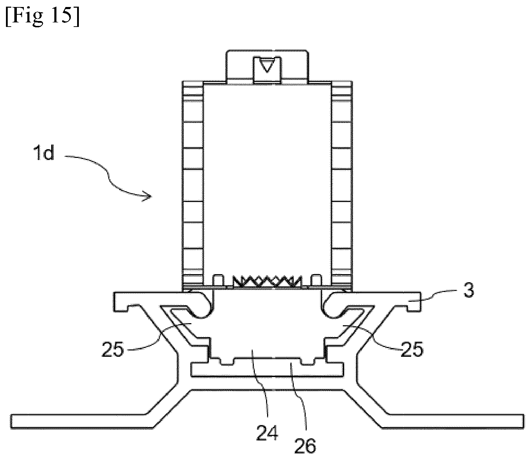

Comme illustré aux figures 14 et 15, l'écrou 24 peut comporter des moyens de blocage, prenant par exemple la forme d'ailettes 25, agencés pour coopérer avec la géométrie de la pièce 3. Le dispositif de connexion 1d selon l'invention peut alors être utilisé selon le procédé suivant :
- assemblage du dispositif de connexion 1d avec l'écrou 24, le moyen de fixation 17 et la pièce de serrage 4, pour former un ensemble dont un exemple est illustré en fig. 14,
- insertion de l'écrou 24 dans une rainure 26 de la pièce 3, l'écrou 24 étant orienté de façon à pouvoir être inséré dans ladite rainure 26,
- rotation de l'écrou 24 de 90° à l'intérieur de la rainure 26, selon un axe perpendiculaire à la rainure 26, afin que l'écrou soit dans une position de blocage, c'est-à-dire qu'il ne puisse pas sortir de la rainure 26 par un mouvement de translation, comme illustré à titre d'exemple en figure. 15.

Dans une variante de l'invention, le dispositif de connexion 1a, 1b, 1c, 1d comporte un moyen de maintien 21 s'étendant à partir du bord de la première ouverture 16, comme illustré aux figures 5 et 8, ou de la deuxième ouverture 20, comme illustré à la figure 2, de façon à mettre en contact le dispositif de connexion avec un moyen de fixation 17 inséré dans la première ouverture 16, respectivement deuxième ouverture 20. Le moyen de maintien 21 s'étend vers l'intérieur de la première ouverture 16, respectivement deuxième ouverture 20, par exemple vers le centre de la première ouverture 16, respectivement deuxième ouverture 20. Le moyen de maintien 21 peut s'étendre dans le plan de la première ouverture 16, respectivement deuxième ouverture 20, mais de préférence il s'étend dans la direction d'insertion du moyen de fixation 17, par exemple sur la figure 2, vers le bas. Ainsi si le moyen de fixation 17 est une vis, le moyen de maintien 21 s'insère dans le pas de vis et s'oppose à l'extraction de la vis de la première ouverture 16, respectivement deuxième ouverture 20. Cette disposition est particulièrement utile dans les domaines tels que le photovoltaïque pour lesquels on visse la vis 17 par son extrémité opposée à sa tête, c'est-à-dire par le bas sur la fig. 2. Dans un tel cas, le premier contact avec la vis en vue du vissage peut faire remonter la vis et la faire sortir de la première ouverture 16, respectivement deuxième ouverture 20. Ce problème est résolu si la vis est maintenue par un moyen de maintien 21. Le moyen de maintien 21 peut aussi permettre une liaison électrique avec le moyen de fixation 17 et ainsi une mise en équipotentialité du moyen de fixation 17 avec les pièces 2, 3, et une mise à la terre éventuelle du moyen de fixation 17. Le moyen de maintien 21 peut avantageusement avoir une forme de dent.

Dans certains modes de réalisation, le moyen de fixation 17 coopère avec la seconde pièce 3 au niveau d'une ouverture allongée 22 pratiquée dans la seconde pièce 3, illustrée à titre d'exemple en figure 10. Cette ouverture allongée 22 permet une certaine tolérance dans le placement du moyen de fixation 17, et donc de la pièce de serrage 4, le long de la seconde pièce 3, par exemple un rail. Or si les deuxièmes moyens d'auto-connexion 6 sont trop proches du moyen de fixation 17, ils peuvent se trouver au niveau de l'ouverture allongée 22 et ne pas être en contact avec la seconde pièce 3, ce qui les empêche de réaliser la liaison électrique entre le dispositif de connexion 1a, 1b, 1c, 1d et la seconde pièce 3. Avec un dispositif de connexion 1a tel qu'illustré aux figures 1 à 3, ce risque est d'autant plus important si le dispositif de connexion 1a, 1b, 1c, 1d est disposé tel qu'illustré en figure 11, l'ouverture allongée 22 se trouvant sous une grande partie de la base 19. Afin d'éviter que les deuxièmes moyens d'auto-connexion 6 ne puissent se trouver en face de cette ouverture allongée 22, il peut être prévu de les éloigner du moyen de fixation 17. Pour ce faire, une distance minimale peut être respectée entre les deuxièmes moyens d'auto-connexion 6 du dispositif de connexion 1a, 1b, 1c, 1d et l'endroit prévu de passage du moyen de fixation 17, qui peut être situé au droit de la première ouverture 16, et au niveau de l'ouverture 20 le cas échéant.

Dans le cadre de la présente invention, la première pièce 2 peut être montée sur la seconde pièce 3 par un procédé de montage comportant les étapes suivantes :
- mise en place d'un dispositif de connexion 1a, 1b, 1c, 1d et d'une pièce de serrage 4 sur ladite seconde pièce 3. Par l'action du moyen de rappel 10, la pièce de serrage 4 est alors maintenue à une distance prédéterminée de sa position serrée, éventuellement dans une position prête à être serrée en s'emboîtant dans la zone de réception 13. Le placement et le maintien du dispositif de connexion 1a, 1b, 1c, 1d et de la pièce de serrage 4 peut être aidé par l'insertion de la pièce de fixation 17 dans la pièce de serrage 4 et dans une ouverture de la première pièce 2, en passant optionnellement par un premier trou 16 et/ou un deuxième trou 20 du dispositif de connexion 1a, 1b, 1c, 1d,
- mise en place de la première pièce 2, de sorte que le dispositif de connexion 1a, 1b, 1c, 1d soit au moins en partie intercalé entre la première pièce 2 et la seconde pièce 3,
- serrage de ladite pièce de serrage 4 de façon à comprimer ledit au moins un moyen de rappel 10, provoquant automatiquement la création d'une liaison équipotentielle entre ledit équipement électrique et ladite structure de support, et optionnellement aussi avec la pièce de serrage 4.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Dispositif de connexion (1a, 1b, 1c, 1d) pour mettre à la terre un équipement électrique et/ou créer une liaison équipotentielle entre des éléments conducteurs, agencé pour être au moins en partie intercalé entre une première pièce (2) et une seconde pièce (3), ladite première pièce (2) appartenant audit équipement électrique et étant électriquement conductrice, et ladite seconde pièce (3) appartenant à une structure de support sur laquelle est monté ledit équipement électrique et étant au moins en partie électriquement conductrice, ledit dispositif de connexion (1a, 1b, 1c, 1d) comportant :
- au moins un premier moyen d'auto-connexion (5) agencé pour créer automatiquement un contact électrique avec ladite première pièce (2) lorsque ledit équipement électrique est monté sur ladite structure de support, et
- au moins un deuxième moyen d'auto-connexion (6) agencé pour créer automatiquement un contact électrique avec ladite seconde pièce (3) lorsque ledit équipement électrique est monté sur ladite structure de support,
de sorte qu'une liaison équipotentielle est créée automatiquement entre au moins ledit équipement électrique et ladite structure de support lors du montage dudit équipement électrique sur ladite structure de support via ledit dispositif de connexion (1a, 1b, 1c, 1d),
***caractérisé en ce que*** ledit dispositif de connexion (1a, 1b, 1c, 1d) comporte en outre au moins un moyen de rappel (10) agencé pour s'étendre entre une pièce de serrage (4) de ladite première pièce (2) sur ladite seconde pièce (3) et ladite seconde pièce (3), et pour être comprimé lorsque ladite pièce de serrage (4) est en position serrée, ledit au moins un moyen de rappel (10) étant apte à maintenir ladite pièce de serrage (4) à une distance prédéterminée de sa position serrée lorsque ladite pièce de serrage (4) n'est pas en position serrée, ledit au moins un moyen de rappel (10) comportant des sections rectilignes (11) reliées par au moins une section courbe (12), le rayon de courbure de l'au moins une section courbe (12) étant diminué lorsque le moyen de rappel est comprimé,
***et en ce que*** ledit dispositif de connexion (1a, 1b, 1c, 1d) comporte une lame électriquement conductrice, ledit au moins un moyen de rappel (10) étant formé dans ladite lame par découpage et/ou pliage.

2. Dispositif de connexion (1a, 1b, 1c, 1d) selon la revendication 1, **caractérisé en ce que** ledit premier moyen d'auto-connexion (5) et/ou ledit deuxième moyen d'auto-connexion (6) est formé dans ladite lame par découpage et/ou pliage.

3. Dispositif de connexion (1a, 1b, 1c, 1d) selon l'une quelconque des revendications 1 à 2, **caractérisé en ce que** ladite lame est réalisée en acier ressort.

4. Dispositif de connexion (1a, 1b, 1c, 1d) selon l'une quelconque des revendications 1 à 3, **caractérisé en ce qu'**il comporte deux moyens de rappel (10) s'étendant sur deux côtés opposés dudit dispositif de connexion (1a, 1b, 1c, 1d).

5. Dispositif de connexion (1a, 1b, 1c, 1d) selon l'une quelconque des revendications 1 à 4, **caractérisé en ce qu'**il comporte une zone de réception (13) comprenant une paroi de réception (14) formant la base d'un U et au moins deux parois de placement (15) formant les bras dudit U, ladite zone de réception (13) étant réalisée de préférence par découpage et/ou pliage de ladite lame et agencée pour recevoir au moins une partie de ladite pièce de serrage (4).

6. Dispositif de connexion (1a, 1b, 1c, 1d) selon la revendication 5, **caractérisé en ce que** ladite paroi de réception (14) comporte une première ouverture (16) apte à être traversée par un moyen de fixation (17) de la pièce de serrage (4) tel qu'une vis.

7. Dispositif de connexion (1a, 1b, 1c, 1d) selon l'une quelconque des revendications 5 à 6, **caractérisé en ce qu'**au moins une desdites au moins deux parois de placement (15) comporte au moins un moyen de retenue (18) agencé pour s'incruster dans la matière de ladite pièce de serrage (4) et empêcher son retrait, et simultanément créer un contact électrique avec ladite pièce de serrage (4) si elle est électriquement conductrice.

8. Dispositif de connexion (1a, 1b, 1c, 1d) selon la revendication 7, **caractérisé en ce que** ledit au moins un moyen de retenue (18) est formé par au moins une dent pointue, obtenue par découpage et/ou pliage dans un des bras du U de la zone de réception (13), disposée saillante à l'intérieur du U.

9. Dispositif de connexion (1a, 1b, 1c, 1d) selon l'une quelconque des revendications 1 à 8, **caractérisé en ce que** ledit premier moyen d'auto-connexion (5) et/ou ledit deuxième moyen d'auto-connexion (6) comporte une denture pointue, agencée pour s'incruster dans la matière de ladite première pièce (2), respectivement seconde pièce (3), lorsque ledit équipement électrique est monté sur ladite structure de support, ladite denture pointue étant de préférence obtenue par découpage et/ou pliage de ladite lame électriquement conductrice.

10. Dispositif de connexion (1a, 1b, 1c, 1d) selon l'une quelconque des revendications 1 à 9, **caractérisé en ce qu'**il comporte au moins deux premiers moyens d'auto-connexion (5), lesdits au moins deux premiers moyens d'auto-connexion (5) étant agencés pour raccorder automatiquement à la terre ou à un potentiel de référence deux équipements électriques disposés côte à côte et montés sur une structure de support.

11. Dispositif de connexion (1a, 1b, 1c, 1d) selon l'une quelconque des revendications 1 à 10, **caractérisé en ce qu'**il comporte une ouverture (16, 20) configurée pour être traversée par un moyen de fixation (17) de la pièce de serrage (4), ledit dispositif de connexion (1a, 1b, 1c, 1d) comportant en outre au moins un moyen de maintien (21) s'étendant à partir du bord de l'ouverture (16, 20), et permettant de maintenir ledit moyen de fixation (17) dans ladite l'ouverture (16, 20).

12. Dispositif de connexion (1a, 1b, 1c, 1d) selon l'une quelconque des revendications 1 à 11, **caractérisé en ce qu'**il comporte une base (19) comprenant une deuxième ouverture (20) configurée pour être traversée par un moyen de fixation (17) de la pièce de serrage (4), ladite base (19) comportant un troisième moyen d'auto-connexion (23), agencé pour créer automatiquement un contact électrique avec un écrou (24) coopérant avec ledit moyen de fixation (17) lorsque ledit équipement électrique est monté sur ladite structure de support.

13. Dispositif de connexion (1a, 1b, 1c, 1d) selon l'une quelconque des revendications 1 à 12, **caractérisé en ce que** ladite distance prédéterminée est supérieure ou égale à 4 mm.

14. Procédé de montage d'une première pièce (2) sur une seconde pièce (3), ladite première pièce (2) appartenant à un équipement électrique et étant électriquement conductrice, et ladite seconde pièce (3) appartenant à une structure de support sur laquelle est monté ledit équipement électrique, ladite seconde pièce (3) étant au moins en partie électriquement conductrice, ledit procédé comportant les étapes suivantes :
- mise en place d'un dispositif de connexion (1a, 1b, 1c, 1d) selon l'une quelconque des revendications 1 à 11 et d'une pièce de serrage (4) sur ladite seconde pièce (3), de sorte que la pièce de serrage (4) soit maintenue par ledit dispositif de connexion (1a, 1b, 1c, 1d) en position d'être serrée,
- mise en place de ladite première pièce (2), de sorte que le dispositif de connexion (1a, 1b, 1c, 1d) soit au moins en partie intercalé entre la première pièce (2) et la seconde pièce (3),
- serrage de ladite pièce de serrage (4) de façon à comprimer ledit au moins un moyen de rappel (10), provoquant automatiquement la création d'une liaison équipotentielle entre ledit équipement électrique et ladite structure de support.

## Patentansprüche

1. Anschlussvorrichtung (1a, 1b, 1c, 1d) zum Erden eines elektrischen Geräts und/oder zum Herstellen einer Potentialausgleichsverbindung zwischen leitenden Elementen, die so ausgelegt ist, dass sie zumindest teilweise zwischen einem ersten Teil (2) und einem zweiten Teil (3) angeordnet ist, wobei das erste Teil (2) zu dem elektrischen Gerät gehört und elektrisch leitend ist und das zweite Teil (3) zu einer Trägerkonstruktion gehört, auf der das elektrische Gerät montiert ist, und zumindest teilweise elektrisch leitfähig ist, wobei die Anschlussvorrichtung (1a, 1b, 1c, 1d) Folgendes umfasst:
- mindestens eine erste automatische Anschlussvorrichtung (5), die so ausgelegt ist, dass sie automatisch einen elektrischen Kontakt mit dem ersten Teil (2) herstellt, wenn das elektrische Gerät an der Trägerkonstruktion montiert ist, und
- mindestens eine zweite automatische Anschlussvorrichtung (6), die so ausgelegt ist, dass sie automatisch einen elektrischen Kontakt mit dem zweiten Teil (3) herstellt, wenn das elektrische Gerät an der Trägerkonstruktion montiert ist, sodass bei der Montage des elektrischen Geräts an der Trägerkonstruktion auf der Anschlussvorrichtung automatisch mindestens zwischen dem elektrischen Gerät und der Trägerkonstruktion eine Potentialausgleichsverbindung hergestellt wird (1a, 1b, 1c, 1d),
***dadurch gekennzeichnet, dass*** die Anschlussvorrichtung (1a, 1b, 1c, 1d) ferner mindestens ein Rückstellmittel (10) umfasst, das so angeordnet ist, dass es sich zwischen einem Klemmstück (4) des ersten Teils (2) auf dem zweiten Teil (3) und dem zweiten Teil (3) erstreckt und komprimiert wird, wenn sich das Klemmstück (4) in der geklemmten Position befindet, wobei das mindestens eine Rückstellmittel (10) dazu ausgelegt ist, das Klemmstück (4) in einem vorbestimmten Abstand von seiner Klemmposition zu halten, wenn sich das Klemmstück (4) nicht in der Klemmposition befindet, wobei das mindestens eine Rückstellmittel (10) geradlinige Abschnitte (11) aufweist, die durch mindestens einen gebogenen Abschnitt (12) miteinander verbunden sind, wobei der Biegeradius des mindestens einen gebogenen Abschnitts (12) abnimmt, wenn das Rückstellmittel komprimiert wird,
***und dadurch, dass*** die Anschlussvorrichtung (1a, 1b, 1c, 1d) ein elektrisch leitendes Schneidblatt aufweist, wobei das mindestens eine Rückstellmittel (10) durch Schneiden und/oder Biegen im Schneidblatt ausgebildet wird.

2. Anschlussvorrichtung (1a, 1b, 1c, 1d) nach Anspruch 1, **dadurch gekennzeichnet, dass** die erste automatische Anschlussvorrichtung (5) und/oder die zweite automatische Anschlussvorrichtung (6) durch Schneiden und/oder Biegen im Schneidblatt geformt wird.

3. Anschlussvorrichtung (1a, 1b, 1c, 1d) nach einem der Ansprüche 1 bis 2, **dadurch gekennzeichnet, dass** das Schneidblatt aus Federstahl gefertigt ist.

4. Anschlussvorrichtung (1a, 1b, 1c, 1d) nach einem der Ansprüche 1 bis 3, **dadurch gekennzeichnet, dass** sie zwei Rückstellmittel (10) aufweist, die sich über zwei gegenüberliegende Seiten der Anschlussvorrichtung (1a, 1b, 1c, 1d) erstrecken.

5. Anschlussvorrichtung (1a, 1b, 1c, 1d) nach einem der Ansprüche 1 bis 4, **dadurch gekennzeichnet, dass** sie einen Aufnahmebereich (13) mit einer Aufnahmewand (14) umfasst, die den Boden eines U bildet, und mindestens zwei Platzierungswände (15), die die Schenkel des U bilden, wobei der Aufnahmebereich (13) vorzugsweise durch Schneiden und/oder Biegen des Schneidblatts hergestellt und so angeordnet ist, dass er mindestens einen Teil des Klemmstücks (4) aufnehmen kann.

6. Anschlussvorrichtung (1a, 1b, 1c, 1d) nach Anspruch 5, **dadurch gekennzeichnet, dass** die Aufnahmewand (14) eine erste Öffnung (16) aufweist, durch die ein Befestigungsmittel (17) für das Klemmstück (4), wie beispielsweise eine Schraube, hindurchgeführt werden kann.

7. Anschlussvorrichtung (1a, 1b, 1c, 1d) nach einem der Ansprüche 5 bis 6, **dadurch gekennzeichnet, dass** mindestens eine der mindestens zwei Platzierungswände (15) mindestens ein Rückhaltemittel (18) aufweist, das so ausgebildet ist, dass es sich im Material des Klemmstücks (4) fest verankert und verhindert, dass dieses herausgezogen wird, und gleichzeitig einen elektrischen Kontakt mit dem Klemmstück (4) herstellt, sofern dieses elektrisch leitfähig ist.

8. Anschlussvorrichtung (1a, 1b, 1c, 1d) nach Anspruch 7, **dadurch gekennzeichnet, dass** das mindestens ein Rückhaltemittel (18) durch mindestens einen spitzen Zahn geformt wird, der durch Schneiden und/oder Biegen in einem der Arme des U im Bereich des Aufnahmebereichs (13) entsteht und nach innen in das U hineinragt.

9. Anschlussvorrichtung (1a, 1b, 1c, 1d) nach einem der Ansprüche 1 bis 8, **dadurch gekennzeichnet, dass** die erste automatische Anschlussvorrichtung (5) und/oder die zweite automatische Anschlussvorrichtung (6) eine spitze Verzahnung aufweist, die so ausgebildet ist, dass sie sich im Material des ersten Teils (2) bzw. des zweiten Teils (3) fest verankert, wenn das elektrische Gerät an der Trägerkonstruktion montiert ist, wobei die spitze Verzahnung vorzugsweise durch Schneiden und/oder Biegen des elektrisch leitenden Schneidblatts hergestellt wird.

10. Anschlussvorrichtung (1a, 1b, 1c, 1d) nach einem der Ansprüche 1 bis 9, **dadurch gekennzeichnet, dass** sie mindestens zwei erste automatische Anschlussvorrichtungen (5) umfasst, wobei die mindestens zwei ersten automatischen Anschlussvorrichtungen (5) so ausgelegt sind, dass sie zwei nebeneinander angeordnete und auf einer Trägerkonstruktion montierte elektrische Geräte automatisch mit Erde oder einem Bezugspotenzial verbinden.

11. Anschlussvorrichtung (1a, 1b, 1c, 1d) nach einem der Ansprüche 1 bis 10, **dadurch gekennzeichnet, dass** sie eine Öffnung (16, 20) aufweist, die so ausgebildet ist, dass ein Befestigungsmittel (17) des Klemmstücks (4) durch diese hingedurchführt werden kann, wobei die Anschlussvorrichtung (1a, 1b, 1c, 1d) ferner mindestens ein Haltemittel (21) aufweist, das sich vom Rand der Öffnung (16, 20) aus erstreckt und das Befestigungsmittel (17) in der Öffnung (16, 20) halten kann.

12. Anschlussvorrichtung (1a, 1b, 1c, 1d) nach einem der Ansprüche 1 bis 11, **dadurch gekennzeichnet, dass** sie einen Boden (19) umfasst, der eine zweite Öffnung (20) aufweist, die so ausgebildet ist, dass ein Befestigungsmittel (17) des Klemmstücks (4) durch sie hindurchgeführt werden kann, wobei der Boden (19) eine dritte automatische Anschlussvorrichtung (23) aufweist, die so ausgelegt ist, dass sie automatisch einen elektrischen Kontakt mit einer Mutter (24) herstellt, die mit dem Befestigungsmittel (17) zusammenwirkt, wenn das elektrische Gerät an der Trägerkonstruktion montiert ist.

13. Anschlussvorrichtung (1a, 1b, 1c, 1d) nach einem der Ansprüche 1 bis 12, **dadurch gekennzeichnet, dass** der vorbestimmte Abstand größer oder gleich 4 mm ist.

14. Verfahren zur Montage eines ersten Teils (2) auf einem zweiten Teil (3), wobei das erste Teil (2) zu einem elektrischen Gerät gehört und elektrisch leitfähig ist und das zweite Teil (3) zu einer Trägerkonstruktion gehört, auf der das elektrische Gerät montiert ist, wobei das zweite Teil (3) zumindest teilweise elektrisch leitfähig ist, und das Verfahren folgende Schritte umfasst:
- Anbringen einer Anschlussvorrichtung (1a, 1b, 1c, 1d) nach einem der Ansprüche 1 bis 11 und eines Klemmstücks (4) auf dem zweiten Teil (3), so dass das Klemmstück (4) durch die Anschlussvorrichtung (1a, 1b, 1c, 1d) in einer geklemmten Position gehalten wird,
- Anbringen des ersten Teils (2) derart, dass sich die Anschlussvorrichtung (1a, 1b, 1c, 1d) zumindest teilweise zwischen dem ersten Teil (2) und dem zweiten Teil (3) befindet,
- Spannen des Klemmstücks (4), um das mindestens eine Rückstellmittel (10) zu komprimieren, wodurch automatisch eine potentialausgleichende Verbindung zwischen dem elektrischen Gerät und der Trägerkonstruktion hergestellt wird.

## Claims

1. Connection device (1a, 1b, 1c, 1d) for earthing an electrical apparatus and/or establishing an equipotential connection between conductive elements, said device being arranged to be at least partly interposed between a first part (2) and a second part (3), said first part (2) belonging to said electrical apparatus and being electrically conductive, and said second part (3) belonging to a support structure on which said electrical apparatus is installed and being electrically conductive at least in part, said connection device (1a, 1b, 1c, 1d) comprising:
- at least one first auto-connect means (5) arranged to automatically establish electrical contact with said first part (2) when said electrical apparatus is installed on said support structure, and
- at least one second auto-connect means (6) arranged to automatically establish electrical contact with said second part (3) when said electrical apparatus is installed on said support structure,
such that an equipotential connection is automatically established between at least said electrical apparatus and said support structure when said electrical apparatus is installed on said support structure by means of said connection device (1a, 1b, 1c, 1d), ***characterised in that*** said connection device (1a, 1b, 1c, 1d) further comprises at least one return means (10), which is arranged to extend between a part (4) for clamping said first part (2) on said second part (3) and said second part (3) and arranged to be compressed when said clamping part (4) is in the clamping position, said at least one return means (10) being able to keep said clamping part (4) at a predetermined distance from its clamping position when said clamping part (4) is not in the clamping position, said at least one return means (10) comprises rectilinear sections (11) connected by at least one curved section (12), the radius of curvature of the at least one curved section (12) being reduced when the return means is compressed,
***and in that*** said connection device (1a, 1b, 1c, 1d) comprises an electrically conductive blade, said at least one return means (10) being formed in said blade by cutting and/or bending.

2. Connection device (1a, 1b, 1c, 1d) according to claim 1, **characterised in that** said first auto-connect means (5) and/or said second auto-connect means (6) is formed in said blade by cutting and/or bending.

3. Connection device (1a, 1b, 1c, 1d) according to any of claims 1 to 2, **characterised in that** said blade is made of spring steel.

4. Connection device (1a, 1b, 1c, 1d) according to any of claims 1 to 3, **characterised in that** it comprises two return means (10) extending on two opposite sides of said connection device (1a, 1b, 1c, 1d).

5. Connection device (1a, 1b, 1c, 1d) according to any of claims 1 to 4, **characterised in that** it comprises a receiving zone (13) having a receiving wall (14), which forms the base of a U, and at least two placement walls (15), which form the arms of said U, said receiving zone (13) preferably being produced by cutting and/or bending said blade and being arranged to receive at least part of said clamping part (4).

6. Connection device (1a, 1b, 1c, 1d) according to claim 5, **characterised in that** said receiving wall (14) comprises a first opening (16) through which a fastening means (17) of the clamping part (4), such as a screw, can pass.

7. Connection device (1a, 1b, 1c, 1d) according to any of claims 5 to 6, **characterised in that** at least one of said at least two placement walls (15) comprises at least one retaining means (18) arranged to be embedded in the material of said clamping part (4) and prevent the removal of said clamping part and simultaneously to establish electrical contact with said clamping part (4) if it is electrically conductive.

8. Connection device (1a, 1b, 1c, 1d) according to claim 7, **characterised in that** said at least one retaining means (18) is formed by at least one pointed tooth, which is obtained by cutting and/or bending in one of the arms of the U of the receiving zone (13) and arranged so as to project inside the U.

9. Connection device (1a, 1b, 1c, 1d) according to any of claims 1 to 8, **characterised in that** said first auto-connect means (5) and/or said second auto-connect means (6) comprise(s) a pointed toothing which is arranged to be embedded in the material of said first part (2) and/or second part (3) when said electrical apparatus is installed on said support structure, said pointed toothing preferably being obtained by cutting and/or bending said electrically conductive blade.

10. Connection device (1a, 1b, 1c, 1d) according to any of claims 1 to 9, **characterised in that** it comprises at least two first auto-connect means (5), said at least two first auto-connect means (5) being arranged to automatically connect two electrical apparatuses, which are arranged side by side and installed on a support structure, to earth or to a reference potential.

11. Connection device (1a, 1b, 1c, 1d) according to any of claims 1 to 10, **characterised in that** it comprises an opening (16, 20) configured for a fastening means (17) of the clamping part (4) to pass therethrough, said connection device (1a, 1b, 1c, 1d) further comprising at least one holding means (21) that extends from the edge of the opening (16, 20) and allows said fastening means (17) to be held in said opening (16, 20).

12. Connection device (1a, 1b, 1c, 1d) according to any of claims 1 to 11, **characterised in that** it comprises a base (19) comprising a second opening (20) configured for a fastening means (17) of the clamping part (4) to pass therethrough, said base (19) comprising a third auto-connect means (23) arranged to automatically establish electrical contact with a nut (24) that interacts with said fastening means (17) when said electrical apparatus is installed on said support structure.

13. Connection device (1a, 1b, 1c, 1d) according to any of claims 1 to 12, **characterised in that** said predetermined distance is greater than or equal to 4 mm.

14. Method for installing a first part (2) on a second part (3), said first part (2) belonging to an electrical apparatus and being electrically conductive, and said second part (3) belonging to a support structure on which said electrical apparatus is installed, said second part (3) being electrically conductive at least in part, said device comprising the following steps:
- placing a connection device (1a, 1b, 1c, 1d) according to any of claims 1 to 13 and a clamping part (4) on said second part (3) such that the clamping part (4) is held by said connection device (1a, 1b, 1c, 1d) in a position for being clamped,
- placing said first part (2) such that the connection device (1a, 1b, 1c, 1d) is at least partly interposed between the first part (2) and the second part (3),
- clamping said clamping part (4) so as to compress said at least one return means (10), automatically causing an equipotential connection to be established between said electrical apparatus and said support structure.
